# EUROPEAN PATENT APPLICATION

(11) **EP 2 612 785 A1**
(43) Date of publication of application: **10.07.2013**
(21) Application number: 12305024.7
(22) Date of filing: 09.01.2012
(51) Int. Cl.: B60L 11/18, B60L 5/00

(54) **A method, a system, a device, a computer program, a computer program product for charging an electrical vehicle**

(71) Applicant: Alcatel Lucent, 75007 Paris (FR)
(72) Inventor: Noack, Ferenc, 12353 Berlin (DE); Lange, Christian, 10365 Berlin (DE)
(74) Representative: Wetzel, Emmanuelle

(57) **Abstract**

The invention concerns a method for charging an electrical vehicle, comprising the steps of determining (205) the electrical vehicle to be charged, in particular by selection from a plurality of electrical vehicles, determining (203) a position of the electrical vehicle to be charged within a predetermined structure, supplying (208) electrical energy to the determined electrical vehicle at the determined area.

## Description

### Field of the invention

The invention relates to a method, a device, a system, a computer program, a computer program product for charging an electrical vehicle.

### Background

In parking structures electrical vehicles are typically charged via charging stations that are mounted to dedicated areas of the structure.

However, such systems are not flexible to treat multiple electrical vehicles when the power demand for all exceeds the available power supply or in case more electrical vehicles have to be served than the infrastructure in a parking structure provides charging stations for.

### Summary

The object of the invention is thus to increase flexibility and improve reliability of the charging of electrical vehicles.

The main idea of the invention is to charge an electrical vehicle, by determining the electrical vehicle to be charged, in particular by selection from a plurality of electrical vehicles, determining a position of the electrical vehicle to be charged within a predetermined structure, and supplying electrical energy to the determined electrical vehicle at the determined area. This offers maximum flexibility regarding power supply and demand management while guaranteeing the best possible battery charging performance considering the current constraints.

Advantageously an actuator for supplying electrical energy is displaceable relative to the predetermined structure and the actuator is moved to the determined position.

Advantageously the determined position indicates an area of a surface or platform for carrying vehicles that is displaceable relative to the predetermined structure, wherein an actuator for supplying electrical energy is not displaceable relative to the predetermined structure and the determined area is moved to the actuator.

Advantageously an actuator for supplying electrical energy is selected from a plurality of actuators.

Advantageously the selection depends on the electrical energy available from an power supply grid.

A system for charging an electrical vehicle, comprising a device operable to determine the electrical vehicle to be charged, in particular by selection from a plurality of electrical vehicles, to determine a position of the electrical vehicle to be charged within a predetermined structure, an actuator operable to supply electrical energy to the determined electrical vehicle at the determined position offers maximum flexibility regarding power supply and demand management as well.

Further developments of the invention can be gathered from dependent claims and the following description.

### Brief description of the figures

In the following the invention will be explained further making reference to the attached drawings.
Fig. 1 schematically shows a part of a system for charging electrical vehicles according to a first embodiment.
Fig. 2 schematically shows a flow chart.
Fig. 3 schematically shows a part of a system for charging electrical vehicles according to a second embodiment.
Fig. 4 schematically shows a part of a system for charging electrical vehicles according to a third embodiment.

### Description of the embodiments

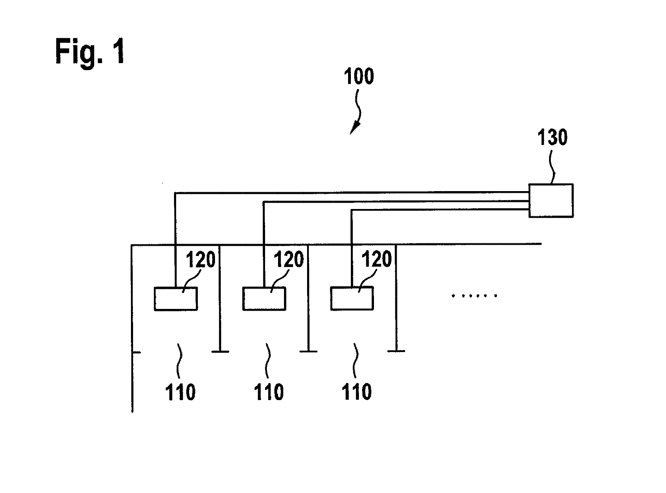

Figure 1 shows a part of a system 100 for charging electrical vehicles according to a first embodiment.

Said system 100 comprises a supply means 130 operable to determine the electrical vehicle to be charged, in particular by selection from a plurality of electrical vehicles.

Furthermore said supply means 130 is operable to determine a position of the electrical vehicle to be charged within a predetermined structure. Said predetermined structure comprises in this example several areas 110 for carrying vehicles that correspond to possible positions of the electrical vehicle. The areas 110 in this example correspond to parking spaces, the predetermined structure to a parking structure with a defined layout. Hence the position of the electrical vehicle is determined as the position of the area 110 at which the electrical vehicle is parked.

Operable to determine the electrical vehicle to be charged and the position of the vehicle within the predetermined structure according to this example means that said supply means 130 comprises a receiver adapted to receive a request to charge an electrical vehicle. The request for example includes information about the current load state of a storage for electrical energy, e.g. a rechargeable battery and charging side constraints of the target storage. The request may comprise a unique vehicle identifier. Furthermore the supply means 130 comprises a processing adapted to select from all received requests the requests of the electrical vehicles having the highest priority e.g. the lowest load state, parking time and other dependencies until the current power demand exceeds the power supply available from an upstream power grid. The available power supply is for example received by the supply means 130 frequently, e.g. every minute, from a server of a supply grid operator.

The supply means 130 may comprise a sender to request frequent updates of current load states from electrical vehicles, e.g. in a broadcast message sent via said sender every minute.

The electrical vehicles are not depicted. However it is clear that the electrical vehicles comprise the respective sender, receiver and processor to send, receive and process the load state information.

In order to send and receive said supply means 130 may be connected to multiple antennas. In this case, to determine the position of a selected electrical vehicle, wireless triangulation may be used to identify the area 110 from which the selected electrical vehicle is sending.

Alternatively the step of determining the position may include reading Radio Frequency Identification Tags comprising unique vehicle identifiers that are mounted to the electrical vehicles. In this case a Radio Frequency Identification Tag reader is mounted for example near each of the areas 100 and connected to the supply means 130 via a data link. Furthermore the position of the selected electrical vehicle is determined by matching the read vehicle identifiers with the vehicle identifiers received with the load information. To that end the position of the Radio Frequency Identification Tag reader having read the matching unique vehicle identifier is read as the position of the selected electrical vehicle or the area 110 in which the selected electrical vehicle is parked from a database storing all positions Radio Frequency Identification Tag reader in the structure.

### Alternatively the step of determining the position may include

GPS position determination where the electric vehicle is for example located with the help of a GPS sender built or near to the vehicle and a tracking module part of supply means 130. Furthermore, this includes a positioning with the help of a GPS receiver built in or near to the vehicle communicating the exact position to supply means 130.

Alternatively the position of the vehicle is decided by a car park system autonomously assigning parking places and monitoring the exact position of each vehicle. Thus, the position of the desired electric vehicle is communicated to supply means 130.

Furthermore said system 100 comprises an actuator 120 operable to supply electrical energy to the determined electrical vehicle at the determined position. In the example depicted in Figure 1 one actuator 120 is mounted near each area 110. Alternatively not all areas 110 may have an actuator 120 mounted next to them.

The actuator 120 in this example comprises for example a first coil operable to create an electromagnetic field that extends to a predefined space near said area 110. Alternatively or additionally the actuator 120 may comprise a retractable power supply means operable to connect to a corresponding receiving means of the electrical vehicle. The retractable power supply means is for example an extendable power cord that is connectable to an upstream power supply grid on the one side via a switch built into said actuator 120, and to a receptacle at the electrical vehicle corresponding to a plug on the other side of the power cord. The retractable power supply means may comprise a drive align or adjust mechanism that is controllable to automatically connect to the electrical vehicle, for example to move the plug side of the extendable power cord until it connects to the receptacle of a parked electrical vehicle.

The actuator 120 is connectable to the upstream power grid via the supply means 130, e.g. by switching the built in switch to connect or disconnect the actuator 120 to the upstream power supply grid. The switch is for example operated, i.e. switched, to connect the first coil or the retractable power supply means to the upstream power supply grid, whenever the actuator 120 receives a message indicating to supply electrical energy to the determined electrical vehicle at the determined position of the actuator 120 or the area 110 at which the electrical vehicle is parked.

Said supply means 130, said actuator 120 and said electrical vehicles or said Radio Frequency Identification Tag readers are connected for example via wireless local area network (WLAN, 802.11). Said connection is for example according to the well known internet protocol (IP), user datagram protocol (UDP), transmission control protocol (TCP) or stream control transmission protocol (SCTP). Signaling is for example according to the well known Simple Object Access Protocol (SOAP), Representational State Transfer (REST) or session initiation protocol (SIP) or Internet Protocol Multimedia Subsystem (IMS). Addressing may be done using the well known uniform resource locators (URL) or uniform resource identifiers (URI).

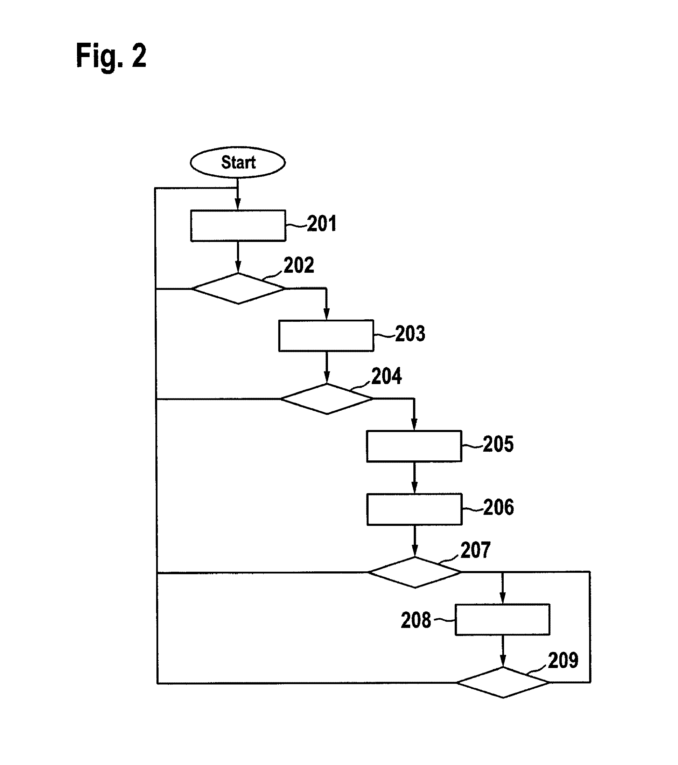

A first method for charging an electrical vehicle is described below making reference to figure 2.

The first method starts for example when an operator of a parking structure powers up said supply means 130.

After the start a step 201 is executed.

In the step 201 an electrical vehicle to be charged is detected. This means for example that it is determined if one or more electrical vehicles to be charged is sending a request including the current load state of its battery and optionally the unique vehicle identifier. The load state is either assigned a unique identifier or in case the unique vehicle identifier is received, it may be assigned to the unique vehicle identifier and stored. Afterwards a step 202 is executed.

In step 202 a test is performed to determine if at least one request by an electrical vehicle has been determined. In case a vehicle has been found, a step 203 is executed. Otherwise the step 201 is executed.

In step 203 the position of the one or more electrical vehicles to be charged is determined. For example the position is determined via wireless triangulation, via the read out of the Radio Frequency Identification Tag readers, GPS position or delivered through monitoring car park systems. The position is assigned to the unique identifier or unique vehicle identifier and stored. Afterwards a step 204 is executed.

In step 204 a test is performed to determine if the position has been found. In case no position has been found, step 201 is executed. In case at least one position has been found step 205 is executed.

In step 205 the electrical vehicles to be charged are determined, in particular by selection from a plurality of electrical vehicles. To that end, a test is performed to determine if the power supply available from the upstream supply grid is sufficient to charge all of the electrical vehicles currently requesting to be charged. In case all electrical vehicles can be charged, all are selected. Otherwise, in case less than all electrical vehicles can be charged with the power supply available from the upstream power supply grid, starting with electrical vehicle having the highest priority, e.g. lowest load state, electrical vehicles having successively increasing load states are selected while the power demand for charging the vehicles doesn't exceed the available power supply from the upstream power supply grid. The available power may be received or measured.

Afterwards a step 206 is executed.

In step 206 the actuator at the position of the selected electrical vehicle, e.g. the area 110 at that the electrical vehicle is parked, is connected to the electrical vehicle. In case of inductive charging the connection is via inductive coupling. In case multiple electrical vehicles have been selected, this step and the following steps may be executed for any number of them. For example the retractable power supply means or the first coil is activated. For example the drive, adjust or align mechanism is operated to connect the extendable power cord to the receptacle of the electrical vehicle. Afterwards a step 207 is executed.

In the step 207 a test is performed to determine if the connection has been established successfully. For example the electrical connection via the extendable power cord is tested for example using a volt meter built into the actuator 120 respectively in the electric vehicle or by exchanged communication messages. In case the connection has been established successfully, a step 208 is executed. Otherwise the step 201 is executed.

In the step 208 the transfer of electrical energy to the determined electrical vehicle at the determined area is started. For example the built in switch in the actuator 120 is switched to connect the retractable power supply means or the first coil to the upstream power supply grid. Afterwards a step 209 is executed.

In step 209 a test is performed to determine if the transfer can continue. For example the battery load state or the electrical connection is monitored via said volt meter. For example the transfer can continue while the electrical connection is uninterrupted until the battery is fully loaded. Alternatively the load state or a request to stop charging may be received by said actuator from said electrical vehicle in a message via the supply means 130.

In case the transfer can continue, step 208 is executed. Otherwise said transfer is interrupted, e.g. by switching the switch in the actuator to disconnect the retractable power supply means or first coil from the upstream power supply grid and in the first case operating the driving mechanism to remove the extendable power cord. Afterwards the step 201 is executed.

The first method ends for example when the operator powers down the supply means 130.

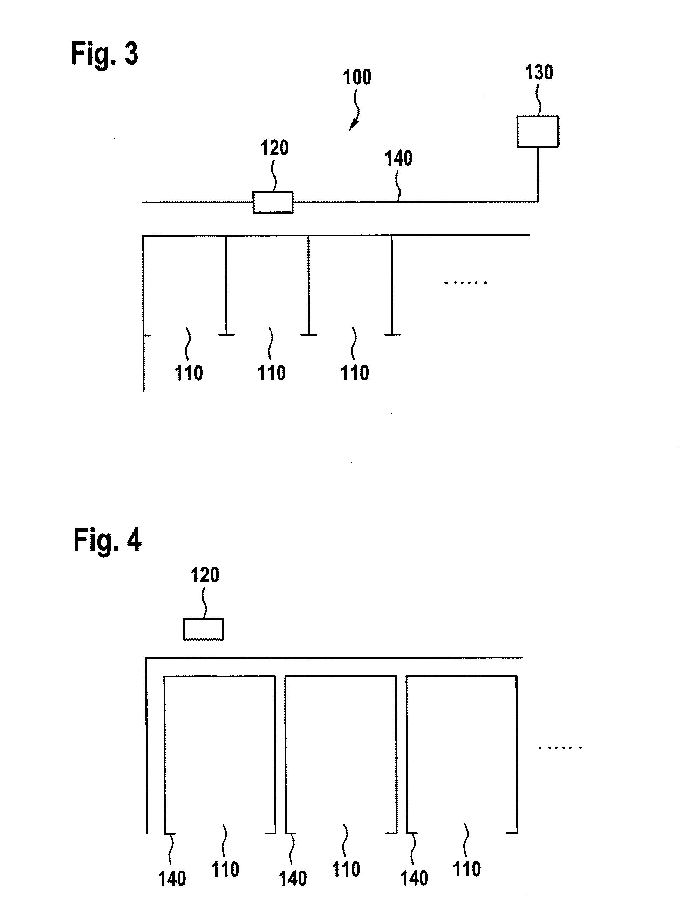

A second embodiment is described making reference to figure 3.

According to the second embodiment the system 100 comprises of the supply means 130 and the actuator 120 of the first example and a drive, adjust or align system 140 operable to move the actuator 120 relative to the structure or area 110.

The drive system for example comprises a linear drive mounted parallel to the border of the areas 110 on one side so that the actuator 120 can be moved by the linear drive along the adjoining areas 110 to the determined position.

The drive system for example is adapted to electrically connect the actuator 120 to the supply means 130, e.g. by a power supply line.

A second method according to the second embodiment is described making reference to figure 2. The second method starts in the same way as the first method and comprises of the same steps as the first method, except for step 205. According to the second method, in step 205 only as many electrical vehicles are selected, as actuators 120 are available. In case of only one actuator, only one electrical vehicle is selected. Additionally or alternatively the drive system is operated to move the actuator 120 to the determined position. This means that the actuator is moved to the area 110 where the electrical vehicle is located that was selected to be charged. In case of multiple actuators 120 all actuators 120 that need to be placed are moved to the respective position.

The second method is not limited to linear drive as the drive system. Instead any other type of drive system, e.g. autonomous re-charging robots that are freely movable within the structure may be used.

A third embodiment is described making reference to figure 4.

According to the third embodiment the system 100 comprises of the supply means 130 and the actuator 120 of the first example and a drive system 140 operable to move the area 110 of the surface for carrying vehicles. In this case the area 110 is displaceable relative to the predetermined structure. Such areas are common in high rack parking structures. Drive systems for high rack parking structures are known to the person skilled in the art and not explained further.

A third method is described below making reference to figure 2.

The third method starts as the first method and comprises the same steps as the first method except for step 205.

According to the third method, in step 205 only as many electrical vehicles are selected, as actuators 120 are available. In case of only one actuator, only one electrical vehicle is selected. Additionally or alternatively the drive system is operated to move the area 110 on that the selected electric vehicle is parked to the determined position of the actuator 120. This means that high rack shelf area 110 where the electrical vehicle is located that was selected to be charged is moved to actuator 120. In case of multiple electrical vehicles all areas 110 that need to be moved are moved to the respective positions.

The second and third embodiment may be combined to have a system with movable actuator 120 and movable area 110 relative to the structure. This combines the advantages of the individual embodiments for maximum flexibility.

The drive system for example comprises a linear drive mounted parallel to the border of the areas 110 on one side so that the actuator 120 can be moved by the linear drive along the adjoining areas 110 to the determined position.

A computer program may be used to implement the methods described above, a computer program product to store such program.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term processor should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for charging an electrical vehicle, **comprising** the steps of determining (205) the electrical vehicle to be charged, in particular by selection from a plurality of electrical vehicles, determining (203) a position of the electrical vehicle to be charged within a predetermined structure, supplying (208) electrical energy to the determined electrical vehicle at the determined area.

2. The method according to claim 1, wherein an actuator (120) for supplying electrical energy is displaceable relative to the predetermined structure and the actuator (120) is moved (205) to the determined position.

3. The method according to claim 1, wherein the determined position indicates an area (110) for carrying vehicles that is displaceable relative to the predetermined structure, wherein an actuator (120) for supplying electrical energy is not displaceable relative to the predetermined structure and the determined area (110) is moved (205) to the actuator (120).

4. The method according to claim 1, wherein an actuator (120) for supplying electrical energy is selected (205) from a plurality of actuators.

5. The method according to claim 4, wherein the selection depends on the electrical energy available from an upstream power supply grid.

6. A system for charging an electrical vehicle, **comprising** a device (130) operable to determine (205) the electrical vehicle to be charged, in particular by selection from a plurality of electrical vehicles, to determine (203) a position of the electrical vehicle to be charged within a predetermined structure, and an actuator (120) operable to supply (208) electrical energy to the determined electrical vehicle at the determined position.

7. The system according to claim 6, comprising a drive system (140) operable to move (205) an area (110) for carrying vehicles within the structure that is indicated by the determined position relative to the structure to an actuator (120) for supplying electrical energy.

8. The system according to claim 6, comprising a drive system (140) operable to move (205) an actuator (120) for supplying electrical energy relative to the structure to the determined position.

9. The system according to claim 6, comprising a supply means (130) operable to select an actuator (120) for supplying electrical energy from a plurality of actuators (120) depending on the determined position.

10. The system according to claim 6, wherein an actuator (120) for supplying electrical energy comprises a first coil operable to create an electromagnetic field.

11. The system according to claim 6, wherein an actuator (120) for supplying electrical energy comprises a retractable power supply means operable to connect to a corresponding receiving means of the electrical vehicle.

12. A device (130, 120) for charging an electrical vehicle, **operable** to determine (205) the electrical vehicle to be charged, in particular by selection from a plurality of electrical vehicles, to determine (203) a position of the electrical vehicle to be charged within a predetermined structure, and to actuate an actuator (120) operable to supply electrical energy to the determined electrical vehicle at the determined position.

13. A computer program for charging an electrical vehicle, **wherein** said computer program, when executed on a computer, causes the computer to perform the steps of the method according to claim 1.

14. A computer program product for charging an electrical vehicle comprising a computer usable medium having a computer readable program, **wherein** said computer readable program, when executed on a computer, causes the computer to perform the steps of the method according to claim 1.

## Amended claims

### Amended claims in accordance with Rule 137(2) EPC.

**1.** A method for charging an electrical vehicle, **comprising** the step of determining (205) the electrical vehicle to be charged by selection from a plurality of electrical vehicles, **characterized in that** a test is performed to determine if the power supply available from the upstream supply grid is sufficient to charge all of the electrical vehicles currently requesting to be charged, wherein in case all electrical vehicles can be charged, all are selected and starting otherwise, in case less than all electrical vehicles can be charged with the power supply available from the upstream power supply grid, with the electrical vehicle having the highest priority, e.g. lowest load state, and selecting electrical vehicles having successively increasing priorities, e.g. load states, while the power demand for charging the vehicles doesn't exceed the available power supply from the upstream power supply grid.

**2.** The method according to claim 1, wherein an actuator (120) for supplying electrical energy is displaceable relative to the predetermined structure and the actuator (120) is moved (205) to the determined position.

**3.** The method according to claim 1, wherein the determined position indicates an area (110) for carrying vehicles that is displaceable relative to the predetermined structure, wherein an actuator (120) for supplying electrical energy is not displaceable relative to the predetermined structure and the determined area (110) is moved (205) to the actuator (120).

**4.** The method according to claim 1, wherein an actuator (120) for supplying electrical energy is selected (205) from a plurality of actuators.

**5.** The method according to claim 4, wherein the selection depends on the electrical energy available from an upstream power supply grid.

**6.** A system for charging an electrical vehicle, **comprising** a device (130) operable to determine (205) the electrical vehicle to be charged, by selection from a plurality of electrical vehicles, **characterized in that** a test is performed to determine if the power supply available from the upstream supply grid is sufficient to charge all of the electrical vehicles currently requesting to be charged, wherein in case all electrical vehicles can be charged, all are selected and starting otherwise, in case less than all electrical vehicles can be charged with the power supply available from the upstream power supply grid, with the electrical vehicle having the highest priority, e.g. lowest load state, and selecting electrical vehicles having successively increasing priorities, e.g. load states, while the power demand for charging the vehicles doesn't exceed the available power supply from the upstream power supply grid.

**7.** The system according to claim 6, comprising a drive system (140) operable to move (205) an area (110) for carrying vehicles within the structure that is indicated by the determined position relative to the structure to an actuator (120) for supplying electrical energy.

**8.** The system according to claim 6, comprising a drive system (140) operable to move (205) an actuator (120) for supplying electrical energy relative to the structure to the determined position.

**9.** The system according to claim 6, comprising a supply means (130) operable to select an actuator (120) for supplying electrical energy from a plurality of actuators (120) depending on the determined position.

**10.** The system according to claim 6, wherein an actuator (120) for supplying electrical energy comprises a first coil operable to create an electromagnetic field.

**11.** The system according to claim 6, wherein an actuator (120) for supplying electrical energy comprises a retractable power supply means operable to connect to a corresponding receiving means of the electrical vehicle.

**12.** A device (130, 120) for charging an electrical vehicle, **operable** to determine (205) the electrical vehicle to be charged, by selection from a plurality of electrical vehicles, **characterized in that** a test is performed to determine if the power supply available from the upstream supply grid is sufficient to charge all of the electrical vehicles currently requesting to be charged, wherein in case all electrical vehicles can be charged, all are selected and starting otherwise, in case less than all electrical vehicles can be charged with the power supply available from the upstream power supply grid, with the electrical vehicle having the highest priority, e.g. lowest load state, and selecting electrical vehicles having successively increasing priorities, e.g. load states, while the power demand for charging the vehicles doesn't exceed the available power supply from the upstream power supply grid.

**13.** A computer program for charging an electrical vehicle, **wherein** said computer program, when executed on a computer, causes the computer to perform the steps of the method according to claim 1.

**14.** A computer program product for charging an electrical vehicle comprising a computer usable medium having a computer readable program, **wherein** said computer readable program, when executed on a computer, causes the computer to perform the steps of the method according to claim 1.
